# EUROPEAN PATENT APPLICATION

(11) **EP 2 503 773 A1**
(43) Date of publication of application: **26.09.2012**
(21) Application number: 11305323.5
(22) Date of filing: 23.03.2011
(51) Int. Cl.: H04N 5/00, G06F 9/50

(54) **Method for configurable sharing of server resources to user requested multimedia applications**

(71) Applicant: Alcatel Lucent, 75007 Paris (FR)
(72) Inventor: Vermoesen, Luc, 2880, Bornem (BE); Acke, Willem, 2820, Bonheiden (BE); Justen, Pascal, 1150, Sint-Pieters-Woluwe (BE)
(74) Representative: ALU Antw Patent Attorneys

(57) **Abstract**

A method for configurable sharing of server resources in response to a user requested multimedia application, comprises the steps of receiving user application parameters (reqAppBWPar1) associated to said requested multimedia application (req(reqAppBWPar1)), a step of verifying whether said requested multimedia application with said user application parameters can be accepted in view of available server resources boundary conditions, whereby, if said requested user application can be accepted, enabling said requested multimedia application to provide its multimedia data to an associated buffer with said user application parameters. A controller for performing the method and a server are as well disclosed.

## Description

The present invention relates to a method of configurable sharing of server encoding resources .

Traditional solutions of video delivery make use of one server encoder per user. This puts a serious cost on these servers in case several users are to be served in parallel . Therefore a server solution using one encoder for servicing several users is desired.

This not only poses problems on the load of the encoder itself, but also on other internal resources, such as the internal server bus, between the different frame buffers located at a central processing unit or a dedicated graphical processing unit, and such an encoder. Typically a PCle V2.0 x16 PCl bus is used with a throughput of 4GB/sec in both directions such that e.g. 80 frame buffers and a shared central encoder are used for serving 80 users by the central server

In case all users would simultaneously demand a high quality video to be delivered from the central encoder, such a configuration could however easily create overload problems. Moreover, there is an additional need to allow for a further expansion of the number of users.

It is therefore an object of embodiments of the present invention to provide a solution which solves the aforementioned problems.

According to embodiments of the present invention these problems are solved by means of said method comprising the steps of receiving user application parameters associated to said requested multimedia application, a step of verifying whether said requested multimedia application with said user application parameters can be accepted in view of available server resources boundary conditions, whereby, if said requested user application can be accepted, enabling said requested multimedia application to provide its multimedia data to an associated buffer with said user application parameters.

In this way applications can be accepted or rejected in view of a check on available server resources.

In an embodiment said user application parameters comprise a set of parameters having upper and lower boundary limits, and said verifying step comprises determining optimized parameter values within said boundary limits, complying to said server boundary conditions, and whereby said optimized parameter values are used for adapting the multimedia data before storage in said associated buffer.

By updating the user requested parameters to more optimized values in view of the server resources, such that the provided multimedia data will also be adapted in accordance with these updated parameters, a more efficient usage of the server resources is obtained.

In case said requested multimedia application cannot be accepted in view of present available server resources, said method comprises a step of updating user application parameters of at least one other active application within predetermined limits, re-performing said step of verification, whereby, if, under these conditions the requested user application can be accepted, enabling said requested multimedia application to provide its multimedia data to an associated buffer with the requested or optimized parameters, while the other active applications will provide their multimedia data to an associated buffer with their updated parameters.

In this case, it will be verified whether existing applications may change their parameters, such as to free again resources for the new requested application.

In case all active applications have updated their user application parameters and said step of verification still indicates that said requested user application cannot be accepted, said requested user application is rejected.

This will thus happen in case all active multimedia applications have already lowered their parameters to the maximum extent, such that, in this case, no new applications can be allowed.

In another embodiment the method further comprises a step of further adapting the multimedia application data stored in said associated buffers, before transport over a bus (B) towards a shared encoder (E).

This further optimizes the usage of the common bus between the frame buffers and the shared encoder. By adapting e.g. by converting the pixel format of the video application data from RGB to YUV422, the needed amount of bits per pixel will decrease from 32 to 16, such that the data transport of the accompanying video application data over the bus will also be decreased by a factor of 2. Other conversions may apply, e.g. converting RBGA32 to Bayer encoding as will be explained in further paragraphs of this document.

The pixels may need to be re-adapted again, in view of the requirements of the shared encoder. This can be done just before provision of the data to said shared encoder.

The user application parameters can be provided on a per application basis, on a per user basis, or on a connected user network communication basis.

The present invention also relates to embodiments of controller, adapted to realize the aforementioned embodiments of the method, and to a server incorporating such a controller.

Further variants are set out in the appended claims.

It is to be noticed that the term 'coupled', used in the claims, should not be interpreted as being limitative to direct connections only. Thus, the scope of the expression *'*a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression *'*a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Fig. 1 schematically shows a high level embodiment of the method with the different steps,
Fig. 2 shows a detailed flowchart of an embodiment of the method used for accepting a requested application,
Fig. 3 shows a detailed flowchart of an embodiment of the method when a request for removing an application is received.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASlC), field programmable gate array (FPGA), read only memory (ROM) for storing software, random access memory (RAM), and non volatile storage.

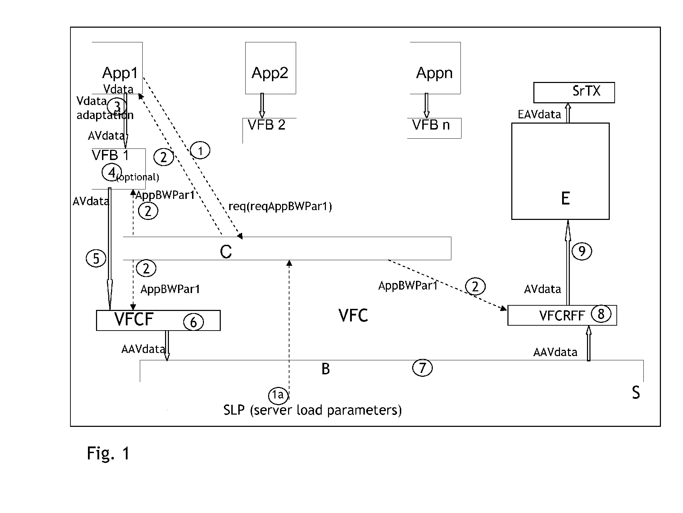

Fig. 1 shows a schematic of an embodiment of a server S, in this example being a video streaming server, which can be connected to a number n of users or clients. These n users are not shown on the drawing. Each of these n users has an allocated application device, denoted App1, App2 to Appn, which can be coupled to an associated buffer, in the embodiment of Fig. 1 being a virtual frame buffer denoted VFB1, VFB2 to VFBn. These application devices App1 to Appn are adapted to receive messages or signals, indicative of a certain application the associated user desires to execute at a certain moment. These requests were provided by the users to the server via particular messages which will not be further discussed here, but internal circuitry or software within the server is able to receive the user requests, and to derive therefrom signals to activate these user-allocated application devices. For example, a user 1 may want to surf on the Internet, and will thus request a browser application e.g. to show a home video page. App1 will then be informed of this request , and, according to an embodiment of the present invention, denoted in Fig. 1, generate in turn another request to a controller C within the server, for adding or enabling this requested browser application, with the user requested parameters. These user requested parameters may also be default parameters. These requested parameters , denoted reqAppBWPar1 in Fig. 1, may comprise the resolution , generally expressed in the amount of pixels to be displayed, the number of frames per second, and information with respect to the pixel format, which in its turn can e.g. be RGB or Bayer or YUB. Some extra information with respect to the pixel format itself can e.g. relate to the content of the image itself e.g. via an indication that the multimedia data concerns a still image or a moving image. For still images demands on image quality such as contrast, sharpness etc, and pixel quality are generally higher as compared to moving images.

The request itself, which is provided from the application device App1 to the controller C is denoted ref(reqAppBWPar1), and the step of providing this request is indicated by "1".

The controller C is then adapted to receive this request and to check whether or not the requested application can be accepted. To this purpose the controller takes into account server boundary conditions with respect to the present status of other active applications, which directly influence the load of the system. These server boundary conditions are represented via server load parameters denoted SLP, which are provided to the controller C as indicated in step 1a. Alternatively the controller C can also monitor these parameters via a specific monitoring unit which will then also provide these parameters to the controller C. These server load parameters may comprise e.g. server CPU usage, server memory usage, number of active processes, number of applications, number of active users coupled to the server, encoder capabilities and internal bus occupancy/bandwidth limitations, Graphical processor unit memory usage, graphical processer unit processor performance in case such a specific graphical processer unit is present in the server, etc. In the embodiment of Fig. 1 the server S only has one encoder E which is to be used in common between all different applications. Moreover this encoder E is coupled to the different applications by means of several intermediate devices which will be discussed later, and by one common bus, denoted B. This bus can e.g. be a PCl bus.

The controller C is then adapted to check whether or not the requested parameters of the requested application are still compliant to the maximum possible server resources. If this is the case, there is no problem and the requested application will be added to the server. To this purpose the controller can thereby generate a control signal for enabling the requested multimedia application App 1 to provide its multimedia data to an associated buffer with the requested user application parameters. The controller can therefore send this message e.g. to the graphical processing unit within the server which then takes care of the data adaptation and transport between the application device and the associated buffer.

If the requested parameters of the requested application were not compliant with the server resources, the controller C can check whether the requested application parameters are expressed as a range of parameters, lying between minimum and maximum values. The controller can then check whether the requested minimum parameters are still compliant with the server boundary conditions. If this is the case, the application can be added with the minimum value of the requested parameters.

Alternatively also a subset change of certain parameters lying in between these minimum and maximum values may be calculated such as to be still compliant with the server boundary conditions.

If however the minimum requested application parameters are still not compliant with the maximum server resources, in view of the presently active applications, the controller C will check whether any of these active applications can lower down its parameters to a minimum value as earlier requested. If this can be done, the complete check for adding the new application with its requested parameters is done over again, and, if it turns out that, in view of the newly adapted parameters of the existing application, the newly requested application can be added, it is done so.

Only when all active applications have lowered down their application parameters to the minimum possible values, and it still turns out that adding the newly requested application with its minimum requested parameters is still not possible in view of the available server resources, this new request is rejected.

On the example of Fig. 1, the requested application is accepted, and this is then followed by a message, in step 2, between the controller C and the application device of this acceptance. This message can as well be sent to a graphical processing unit which will then adapt the application data conform to the determined parameters, before being transported to the associated buffer VFB1. The controller can also provide these determined parameters for this application, being AppBWPar1, which can thus be the requested maximum ones, or the minimum ones, or some optimized values in between them , to two intermediate devices coupled to App1.. One intermediate device is denoted VFB1, and concerns the associated buffer to which the application device can provide its video data. The provision/rendering of the video data Vdata from App1 to VFB1 takes place in step 3, during which step the video data Vdata are also adapted , taking into account part of the newly determined parameters AppBWPar1. This rendering of data, including the adaptation is typically performed by means of a graphical processing unit (not shown on Fig. 1 in order not to overload the drawing), which thus also adapts parameters as resolution , number of frames per second. The new adapted video data is denoted AVdata.

Optionally, the adaptation of the video data can also be performed by a specific component within the VFB1 buffer, as is indicated by step 4 in Fig. 1. In this case the determined user application parameters will thus be provided to this buffer, as is depicted in Fig. 1.

After having received, and optionally having adapted the application data, the VFB1 buffer transmits the adapted video data AVdata, in step 5 to another intermediate device denoted VFCF. This concerns a means for further adapting the video data of the buffer, more in particular with respect to their pixel format, if this was desirable. This is performed during step 6 , and the resulting adapted video data is denoted AAVdata. The advantage of having the multimedia data adapted in 2 steps relates to the optimization of the graphical processing unit resources, especially in case the latter device already takes care of the first adaptation of the video data during transport between the application device and the associated buffer. The additional adaptation within VFCF can be optimized for bus transport whereas the earlier adaption in the first step can also be optimized for lowering the encoding effort and thus increasing encoder performance

In other embodiments however the video data can be adapted from Vdata to AAVdata in one single step, by one single device. If for example the Graphical processing unit resources are sufficiently large, even this device can take care of the complete adaptation.

The adaptation with respect to pixel format may involve e.g. a conversion from RGBA32 to YUV422, such that the needed amount of bits per pixel will decrease from 32 to 16. The data transport of the adapted video data over the bus will thus also be decreased by a factor of 2. Alternative pixel format adaptation may involve an adaptation to YUV420, which only requires 12bit/pixel or even Bayer format, which only requires 8 bits/pixel, or any other pixel encoding format.

The thus further adapted video or application data AAVdata are next transported, in step 7 over the internal server bus B to the common encoder E. Before being provided to the encoder E, the adapted video data AAVdata may need to be possibly reformatted again such as to be in the pixel format understandable by the encoder. A conversion to a favorable format for the encoder for obtaining an optimal encoder performance thereby servicing a maximum amount of users may therefore be preferred. Additionally, most encoders have a limited set of input formats which are not necessarily the format the controller earlier selected for transport over the internal bus B. To this purpose an extra pixel reformatting step may thus be performed in step 8. Some information with respect to this incoming pixel format, which is thus needed during the reformatting step may have been provided by the controller C, possibly simultaneously with the provision of the adapted parameters for the requested application to the graphical processing unit or VFB1 and to the VFCF device in step 2. Therefore Fig. 1 also shows this optional provision of the AppBWPar1 from C to VFCRFF under a step 2.

In the embodiment of Fig. 1 the video data are then again converted in step 8 to their first adapted version AVdata, which are provided to the encoder in step 9. This re-conversion can be performed by a means VFCRFF for re-adapting the further adapted data AAVdata. However in other embodiments this means for performing this extra step 8 may be absent, in case the encoder understands the format AAVdata.

The encoder E may be a traditional encoder, such as an H.264 encoder, which compresses the AVdata or the AAVdata for further optimized transmission over a communications network. In the embodiment of Fig. 1 the compressed or encoded data are denoted EAVdata, which are provided to a server streaming and transmission device SrTX, which performs the encapsulation into packets for transmission over this communications network to the user.

In case VFCRFF is present, it can be integrated within a multi-user encoder ASIC as a hardware component or it can be present as a separate hardware component directly connected to the multi-user encoder. Of course a lot of other embodiments are also possible. In the embodiment of Fig. 1 both the VFCF and the VFCRFF are integrated within a common interface denoted VFC, which can then be shared by all application devices App1 to Appn, meaning that all applications can be coupled to this interface VFC.

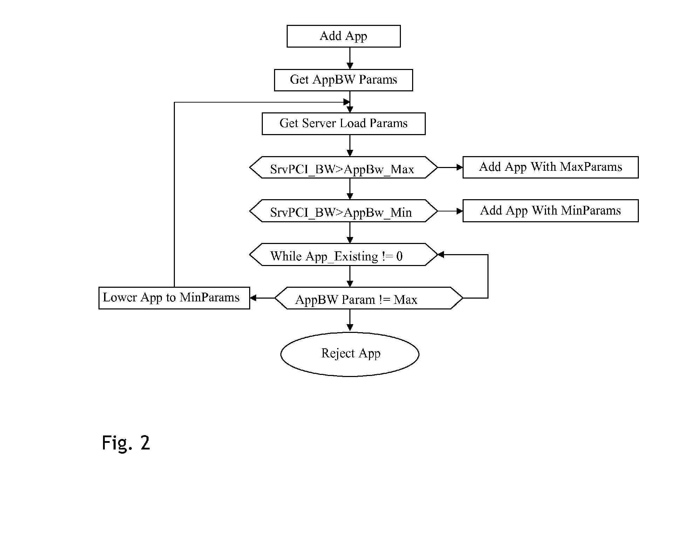

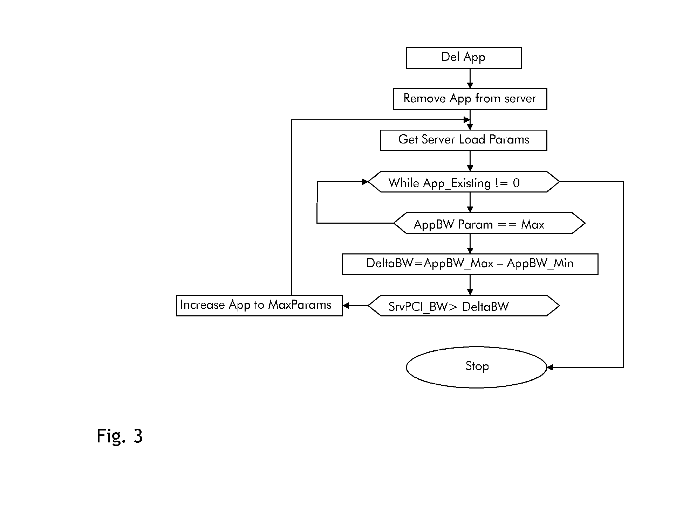

Fig. 2 and 3 give more detailed examples of a method for adding, resp. removing an application.

The example depicted in Fig. 2 starts with a request for adding a new user application . This is denoted "Add App". The requested parameters are then retrieved by the controller C in the second step "Get App BW Params" . This is followed by retrieving the server Load Parameters, which were denoted SLP in Fig. 1. The step of checking whether the user requested application parameters comply with the available server resources boundary conditions is , in the embodiment of Fig. 2, performed by checking whether the internal spare server PCI bus bandwidth, thus being the free bandwidth not yet consumed by the other existing applications, is still sufficiently large to accommodate the newly requested application, with the largest or the requested parameters. If this is the case, this application is accepted with the requested maximum parameters. If this is not the case, it is checked whether the internal spare server PCI bus bandwidth is still sufficient to accommodate for the newly requested application, but this time with the minimum requested parameters. If this is the case, this application is accepted with the requested minimum parameters. If this is not the case, it is checked whether the existing applications , if any (this is checked in step "While App Existing!=0), can still adapt their application parameters, from the maximum value to the minimum value. The check is then performed again with the updated parameters of the existing applications, as represented by the loop arrow back to the step of getting the server load parameters. If, after having adapted all existing applications, to their minimum values, it still turns out that the available spare bandwidth is still not sufficient for accepting the new requested application, the latter is rejected.

Fig. 3 depicts an implementation in the case a user wants to stop or terminate an application. This starts with a request for removing, or deleting the application from the server, as being denoted by "Del App". This application is accordingly removed from the server, after which step the parameters of the existing applications can adapt their parameters again in view of the new available freed resources. In the embodiment of Fig. 3 this freed server resource is again denoted by "SRvPCl_BW ", and is compared with the bandwidth needed by an application from changing from minimum to maximum parameters. It turns out that the free bandwidth can be sufficient to accommodate for this change, the parameters are accordingly adapted.

Of course a lot of other implementations are possible, and can be conceived by a person skilled in the art.

While the principles of the invention have been described above in connection with specific apparatus, it is to be clearly understood that this description is made only by way of example and not as a limitation on the scope of the invention, as defined in the appended claims.

## Claims

1. Method for configurable sharing of server resources in response to a user requested multimedia application, said method comprising the steps of receiving user application parameters (reqAppBWPar1) associated to said requested multimedia application (req(reqAppBWPar1)), a step of verifying whether said requested multimedia application with said user application parameters can be accepted in view of available server resources boundary conditions, whereby, if said requested user application can be accepted, enabling said requested multimedia application to provide its multimedia data to an associated buffer with said user application parameters.

2. Method according to claim 1 wherein said user application parameters comprise a set of parameters having upper and lower boundary limits, and said verifying step comprises determining optimized parameter values (AppBWPar1) within said boundary limits, complying to said server boundary conditions, and whereby said optimized parameter values are used for adapting the multimedia data (Vdata) before storage in said associated buffer (VFB1).

3. Method according to claim 1 or 2, **characterized in that**, in case said requested multimedia application cannot be accepted in view of available server resources, said method comprises a step of updating user application parameters of at least one other active application within predetermined limits, re-performing said step of verification, whereby, if, under these conditions the requested user application can be accepted, enabling said requested multimedia application to provide its multimedia data to an associated buffer (VFB1) with the requested or optimized parameters, while the other active applications will provide their multimedia data to an associated buffer with their updated parameters.

4. Method according to claim 3, whereby, in case all active applications have updated their user application parameters and said step of verification still indicates that said requested user application cannot be accepted, said requested user application is rejected.

5. Method according to any of the previous claims 1-4 comprising a step of further adapting the multimedia application data (AVdata) stored in said buffers, before transport over a bus towards a shared encoder.

6. Method according to claim 5 further comprising a step of re-adapting the multimedia application data before provision to said shared encoder.

7. Controller (C) adapted to perform configurable sharing of server (S) resources in response to a user requested multimedia application received by said server (S), said controller (C) being adapted to receive user application parameters (reqAppBWPar1) associated to said requested multimedia application (req(reqAppBWPar1)),to verify whether said requested multimedia application with said user application parameters can be accepted in view of available server resources boundary conditions (SLP), whereby, if said requested user application can be accepted, said controller is adapted to generate a control signal for enabling said requested multimedia application to provide its multimedia data (Vdata) to an associated buffer (VFB1) with said user application parameters.

8. Controller (C) according to claim 7 wherein said user application parameters comprise a set of parameters having upper and lower boundary limits, such that said controller (C) is adapted to determine optimized parameter values (AppBWPar1) within said boundary limits and complying to said server boundary conditions, and whereby said controller (C) is further adapted to communicate said optimized parameter values (AppBWPar1) such as to enable the adaptation of the multimedia data (Vdata) in accordance with said optimized parameters before storage in said associated buffer (VFB1).

9. Controller (C) according to claim 7 or 8, **characterized in that**, in case said requested multimedia application cannot be accepted in view of available server resources, said controller (C) is adapted to update user application parameters of at least one other active application within predetermined limits, to re-perform said step of verification, whereby, if, under these conditions the requested user application can be accepted, said controller is adapted to generate at least one message for enabling said requested multimedia application to provide its multimedia data to said associated buffer (VFB1) with the requested or optimized parameters, while enabling the other active applications to provide their multimedia data to an associated buffer with their updated parameters.

10. Controller (C) according to claim 9, whereby, in case all active applications have updated their user application parameters and said step of verification still indicates that said requested user application cannot be accepted, said controller (C) is adapted to generate a message for rejecting the requested user application .

11. Server (S) comprising a controller (C) according to any of the previous claims 7-10 and further comprising means (VFCF) for further adapting the multimedia data (AVdata) stored in said associated buffer (VFB1), thereby creating further adapted application data (AAVdata) for further transport over a bus towards (B) a shared encoder (E).

12. Server (S) according to claim 11 wherein said means (VFCF) for further adapting the multimedia data is coupled to the associated buffers of all active applications.

13. Server (S) according to claim 11 and 12, further comprising means (VFCRFF) for re-adapting the further adapted (AAVdata) multimedia application data before provision to said shared encoder.
